# EUROPÄISCHE PATENTANMELDUNG

(11) **EP 0 610 732 A1**
(43) Veröffentlichungstag der Anmeldung: **17.08.1994**
(21) Anmeldenummer: 94101220.5
(22) Anmeldetag: 27.01.1994
(51) Int. Cl.: B23C 3/12, B27D 5/00

(54) **Vorrichtung zum Entgraten von Kanten**

(30) Priorität: 28.01.1993 DE 4302376
(71) Anmelder: Josef Gartner & Co., D-89421 Gundelfingen (DE)
(72) Erfinder: Noteborn, Peter A.W., NL-6467 CA Kerkrade (NL)
(74) Vertreter: Müller-Boré & Partner Patentanwälte

(57) **Zusammenfassung**

Eine Vorrichtung zum Entgraten von Kanten (1',1'') einer Platte (1), insbesondere einer Metallplatte, besitzt ein rotierendes Werkzeug (18), das mit zwei im Bereich seines Außenumfangs vorgesehenen, einander zugewandten Bearbeitungskanten zwei im wesentlichen parallel zueinander verlaufende Kanten umgreift und mit diesen in Berührung bringbar ist, von denen eine erste Kante an einer unteren Fläche und eine zweite Kante an einer oberen Fläche der Platte gebildet ist. Die Vorrichtung weist darüber hinaus zumindest eine Anlagefläche zur Positionierung des Werkzeugs bezüglich der Platte auf.

## Beschreibung

Die Erfindung betrifft eine Vorrichtung zum Entgraten von Kanten einer Platte, wie sie im Anspruch 1 angegeben ist.

Aus der US-A-3 495 313 ist eine Vorrichtung zum Entgraten von Kanten bekannt, welche einen rotierenden Fräskopf aufweist, der an seinem Außenumfang mit einer konkav ausgebildeten Peripherie versehen ist, welche die Kanten eines Blechs bearbeitet. Es besteht bei dieser Vorrichtung allerdings die Gefahr, daß der Fräskopf unkontrolliert tief in das Blech eindringt, wodurch die Kante einen ungleichmäßigen Verlauf erhält.

Die DE-A-3 432 936 offenbart ein rotierendes Entgratwerkzeug, welches zwei axial voneinander beabstandete, mit Schneidplättchen versehene Stützkörper aufweist, deren Axialabstand zueinander einstellbar und damit an die Dicke eines zu bearbeitenden Blechs anpaßbar ist. Die horizontale und die vertikale Führung des Entgratwerkzeugs erfolgen durch eine NC-gesteuerte Werkzeugmaschine.

Platten und Bleche, die zum Pulverlackieren vorbereitet werden, müssen an ihren Kanten wirksam entgratet werden, da ansonsten im Bereich der Kanten die Gefahr besteht, daß die Pulverlackierung an den Kanten nicht vollständig erfolgt oder nicht ausreichend haftet. Als Spätfolgen davon kann an diesen Stellen eine unerwünschte Korrosion auftreten. Ein Entgraten der Kanten kann häufig aber nur bei der Montage auf der Baustelle erfolgen, nachdem die zu bearbeitende Platte an die Einbauerfordernisse angepaßt worden ist.

Der Erfindung liegt die Aufgabe zugrunde, eine Vorrichtung zum Entgraten von Kanten einer Platte zu schaffen, die ein schnelles, sauberes und zuverlässiges Entgraten, bei Bedarf auch auf der Baustelle, gestattet, wobei gewährleistet ist, daß die generelle Umfangskontur der Platte nicht verändert wird.

Diese Aufgabe wird durch die im Anspruch 1 angegebenen Merkmale gelöst.

Durch das Vorsehen eines rotierenden Werkzeugs, das mit zwei im Bereich seines Außenumfangs vorgesehenen, einander zugewandten Bearbeitungskanten zwei im wesentlichen parallel zueinander verlaufende Kanten umgreift und mit diesen in Berührung bringbar ist, von denen eine erste Kante an einer unteren Fläche und eine zweite Kante an einer oberen Fläche der Platte gebildet ist, und durch das Vorsehen zumindest einer Anlagefläche zur Positionierung des Werkzeugs bezüglich der Platte wird gewährleistet, daß das Werkzeug bezüglich der Platte einfach und schnell in der gewünschten Weise ausrichtbar ist. Dadurch wird erreicht, daß das Werkzeug bezüglich der zu bearbeitenden Kanten in der gewünschten Weise sicher geführt werden kann.

Erstreckt sich die Anlagefläche im wesentlichen rechtwinklig zur Rotationsachse des Werkzeugs, so wird ein Verkanten des Werkzeugs zuverlässig verhindert und ein gleichmäßiges Abtragen der beiden zu bearbeitenden Kanten gewährleistet.

Umgibt die Anlagefläche das rotierende Werkzeug zumindest teilweise, so kann das Werkzeug besonders flexibel manuell an den Kanten entlanggefahren werden, was besonders wichtig ist bei der Bearbeitung von Ecken oder Ausnehmungen im Bereich der Kanten.

Erstreckt sich die Anlagefläche im wesentlichen parallel zu einer durch die Rotationsachse des Werkzeugs verlaufenden Ebene, so wird erreicht, daß die Eindringtiefe des Werkzeugs in die Platte über den Verlauf der Kanten gleichmäßig ist, wenn das Werkzeug an den Kanten entlanggeführt wird.

Ist in der Vorrichtung eine erste, rechtwinklig zur Rotationsachse des Werkzeugs verlaufende Anlagefläche radial außerhalb der Bearbeitungsflächen des Werkzeugs aber diesen axial und radial benachbart angeordnet und ist eine zweite, parallel zur Rotationsachse des Werkzeugs verlaufende Anlagefläche in einem Abstand von der Rotationsachse angeordnet, der geringer ist als der Radius des rotierenden Werkzeugs, wobei in der zweiten Anlagefläche eine Öffnung zum Durchtritt eines Teils des Außenumfangs des Werkzeugs vorgesehen ist, so wird auf einfache aber zuverlässige Weise eine Führung des Werkzeugs sowohl in der Ebene der zu bearbeitenden Platte als auch entlang der Kanten ermöglicht. Die Vorrichtung kann daher manuell geführt werden, ohne daß die Gefahr besteht, daß das Werkzeug verkantet und daß das Werkzeug unerwünscht tief in die Kanten eindringt.

Ist in der Vorrichtung eine stätionäre Aufspannvorrichtung für die Platte vorgesehen, die sowohl eine erste, rechtwinklig zur Rotationsachse des Werkzeugs verlaufende Anlagefläche als auch eine zweite, parallel zur Rotationsachse des Werkzeugs verlaufende Anlagefläche aufweist, und besitzt die Vorrichtung einen mit der Aufspannvorrichtung verbundenen und bezüglich der Aufspannvorrichtung translatorisch verfahrbaren Werkzeugträger, wobei sich die Verfahrbahn des Werkzeugträgers parallel zu den zu bearbeitenden Kanten erstreckt, so kann eine maschinelle, halbautomatische Entgratung der Kanten vorgenommen werden, wodurch eine hohe Produktionsgeschwindigkeit erzielt wird.

Ist dabei die zweite Anlagefläche an zumindest einem Anlageelement gebildet, das im Bereich der zu bearbeitenden Kanten an der Aufspannvorrichtung schwenkbar angebracht ist, so kann eine exakte Positionierung der zu bearbeitenden Kanten erfolgen, kurz bevor der Bearbeitungsschritt beginnt, wozu dann nach dem Ausrichten und Festspannen der Platte das Anlageelement weggeschwenkt und die Kanten für das Werkzeug freigegeben werden.

Die Erfindung wird nachfolgend anhand von Beispielen unter Bezugnahme auf die Zeichnung näher erläutert; in dieser zeigen:
- Fig. 1: eine teilweise geschnittene Ansicht eines Werkzeugs zum Entgraten von Kanten,
- Fig. 2: eine schematische Vorderansicht eines Werkzeugs zum Entgraten von Kanten,
- Fig. 3: eine geschnittene Teilansicht einer prinzipiellen Vorrichtung nach der Erfindung beim Bearbeiten einer Platte,
- Fig. 4: eine erste, manuell betätigbare Ausführungsform der Erfindung in räumlicher Ansicht von unten,
- Fig. 5: eine zweite, manuell betätigbare Ausführungsform der Erfindung in räumlicher Ansicht von unten und
- Fig. 6: eine dritte, halbautomatisch arbeitende Ausführungsform der Erfindung in räumlicher Ansicht von oben.

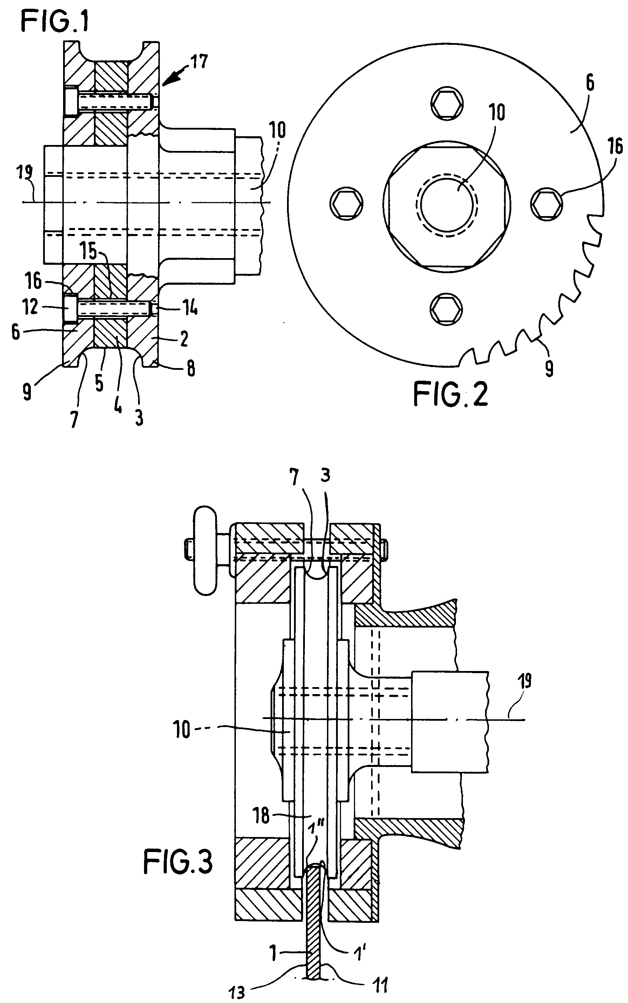

Das in Fig. 1 gezeigte Werkzeug zum Entgraten von Kanten einer Platte weist eine Welle 10 auf, die auf herkömmliche Weise, z. B. von einem Getriebemotor, drehangetrieben ist. Auf der Welle 10 ist eine Profilscheibenanordnung 2, 4, 6 vorgesehen und drehfest an der Welle 10 befestigt.

Die Profilscheibenanordnung besteht, in Axialrichtung betrachtet, aus einer ersten Profilscheibe 2, einer Zwischenscheibe 4 und einer zweiten Profilscheibe 6. Die Dicke der auswechselbaren Zwischenscheibe 4 bestimmt den Abstand der Profilscheiben 2, 6 voneinander. Damit läßt sich das Werkzeug an unterschiedlich dicke Platten anpassen.

Die Profilscheiben 2, 6 weisen an ihrem Umfang auf den einander zugewandten Seiten jeweils eine im Querschnitt konkav ausgebildete Kontur auf, wobei am jeweiligen axial stirnseitigen Umfangsrand der Profilscheiben 2, 6 Reißzähne 8 ausgeformt sind. Die Reißzähne 8 des jeweiligen Umfangsrands weisen jeweils im Bereich der konkav ausgebildeten Kontur einander zugewandte Bearbeitungskanten 3, 7 auf. Der Krümmungsradius der konkav ausgebildeten Bearbeitungskanten liegt zwischen 1 mm und 2 mm und beträgt bevorzugt 1,5 mm.

Der Umfangsrand der Zwischenscheibe 4 ist profillos und geht stufenlos in den jeweils benachbarten Umfangsrand der Profilscheiben 2, 6 über. Auf diese Weise ist eine im Querschnitt U-förmige Kontur der gesamten Profilscheibenanordnung geschaffen.

Die Profilscheiben 2, 6 und die Zwischenscheibe 4 sind jeweils mit fluchtenden achsparallelen Durchgangsbohrungen 14, 15, 16 versehen. Die Durchgangsbohrungen in der Profilscheibe 6 und der Zwischenscheibe 4 sind jeweils zum Durchtritt einer Befestigungsschraube 12 ausgebildet, welche jeweils in den mit Gewinde versehenen Teil der Durchgangsbohrung in der Profilscheibe 2 eingeschraubt ist und so die Profilscheibenanordnung zusammenhält. Vorzugsweise sind vier derartige Durchgangsbohrungen über den Umfang der Profilscheibenanordnung verteilt vorgesehen, wie in Fig. 2 zu sehen ist.

Fig. 3 zeigt prinzipiell eine Vorrichtung nach der Erfindung beim Bearbeiten einer Platte. Die Profilscheibenanordnung ist dabei als einstückiges Fräswerkzeug 18 ausgebildet. Die Vorrichtung entspricht ansonsten aber der Ausführung nach Fig. 1. In Fig. 3 ist beispielhaft auch eine Platte 1 gezeigt, deren zu entgratende Kanten 1', 1'' in Berührung mit den Bearbeitungskanten 3, 7 stehen.

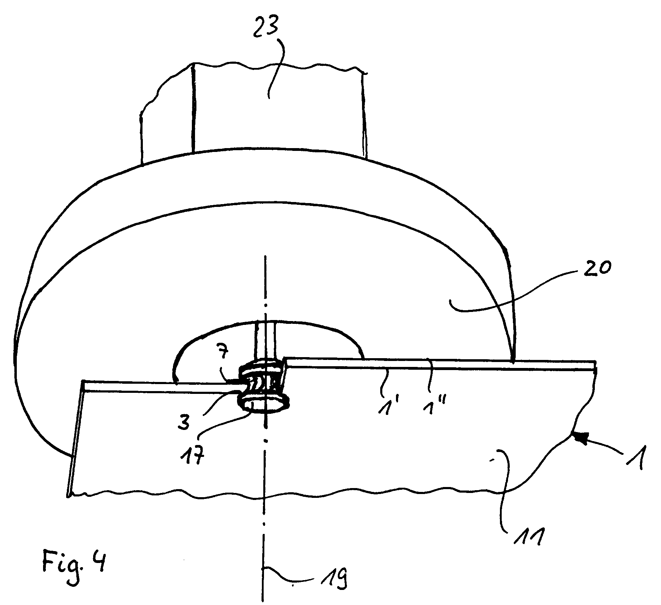

In Fig. 4 ist eine Vorrichtung nach der Erfindung gezeigt, die eine Anlagefläche 20 aufweist, welche sich im wesentlichen rechtwinklig zur Rotationsachse 19 des Werkzeugs 17 erstreckt. Die Anlagefläche 20 umgibt dabei das rotierende Werkzeug 17. Der Axialabstand der Bearbeitungskanten 3, 7 des Werkzeugs 17 bezüglich der Anlagefläche 20 ist derart bemessen, daß die Anlagefläche 20 auf der von der unteren Fläche 11 der Platte 1 abgewandt gelegenen oberen Fläche 13 aufliegt, während die Bearbeitungskanten 3, 7 des Werkzeugs 17 mit den zu bearbeitenden Kanten 1', 1'' der Platte 1 in Berührung geraten. Hierdurch wird gewährleistet, daß ein gleichmäßiger Abtrag an den zu bearbeitenden Kanten 1' und 1'' erfolgt, weil das Werkzeug 17 bezüglich der Kanten 1', 1'' symmetrisch angeordnet ist. Außerdem wird ein Verkanten des Werkzeugs 17 verhindert, da die Vorrichtung mit ihrer Anlagefläche 20 großflächig auf der Platte 1 aufliegt. Diese Vorrichtung kann somit manuell frei, aber verkantungssicher entlang der Kanten 1', 1'' der Platte 1 geführt werden, was insbesondere bei der Entgratung im Bereich von Ecken oder Ausnehmungen der Platte vorteilhaft ist.

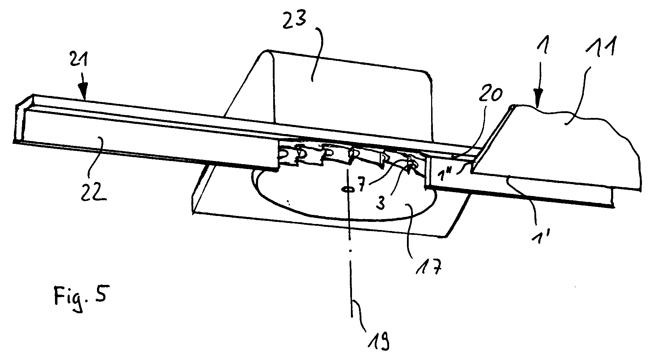

In Fig. 5 ist eine weitere Vorrichtung nach der Erfindung gezeigt, welche ebenfalls zur manuellen Bedienung ausgelegt ist. Die Anlagefläche 20 ist dabei an einem Winkelprofil 21 ausgebildet, welches im Bereich des rotierenden Werkzeugs 17 an der Vorrichtung vorgesehen ist.

Ein Getriebemotor 23 ist, ebenso wie in Fig. 4, nur schematisch dargestellt und bildet den Antrieb für das Werkzeug 17. Eine weitere Anlagefläche 22 erstreckt sich im wesentlichen paralell zu einer durch die Rotationsachse des Werkzeugs verlaufenden Ebene und somit im rechten Winkel zur ersten Anlagefläche 20.

Die erste, rechtwinklig zur Rotationsachse 19 des Werkzeugs 17 verlaufende Anlagefläche 20 erstreckt sich größtenteils radial außerhalb der Bearbeitungsflächen 3, 7 des Werkzeugs 17, ist diesen aber im mittleren Bereich der Anlagefläche 20 axial und radial benachbart angeordnet. Der axiale Abstand zwischen den Bearbeitungsflächen 3, 7 des Werkzeugs 17 und der ersten Anlagefläche 20 ist auf die gleiche Weise bemessen, wie dies im Zusammenhang mit dem Beispiel in Fig. 4 beschrieben worden ist. Auf diese Weise wird auch bei dieser Ausführungsform ein Verkanten des Werkzeugs 17 sicher verhindert und ein gleichmäßiges Entgraten der Kanten 1', 1'' der Platte 1 gewährleistet.

Die zweite, parallel zur Rotationsachse 19 des Werkzeugs 17 verlaufenden Anlagefläche 22 ist in einem Abstand von der Rotationsachse 19 angeordnet, der geringer ist, als der Radius des rotierenden Werkzeugs 17. Geometrisch betrachtet schneidet die zweite Anlagefläche 22 den Umfangskreis des Werkzeugs 17. Aus diesem Grund ist in der zweiten Anlagefläche 22 eine Öffnung 24 vorgesehen, durch die ein Sektor des die Bearbeitungskanten 3, 7 aufweisenden Außenumfangs des Werkzeugs 17 aus der Anlagefläche 22 heraustreten kann. Der bevorzugterweise einstellbare Abstand zwischen der Anlagefläche 22 und der Rotationsachse 19 des Werkzeugs 17 ist dabei so bemessen, daß die Bearbeitungsflächen 3, 7 des rotierenden Werkzeugs 17 gerade soweit im Bereich der zu bearbeitenden Kanten 1', 1'' in die an den Anlageflächen 20, 22 anliegende Platte 1 eindringen, daß der vorhandene Grat an den Kanten 1', 1'' in der gewünschten Weise entfernt wird und der Platte 1 im Bereich der Kanten 1', 1'' gebenenfalls eine gewünschte Rundung verliehen wird.

Die in Fig. 5 gezeigte Vorrichtung verhindert somit nicht nur ein Verkanten des Werkzeugs 17, sondern gewährleistet darüber hinaus auch ein gleichmäßiges Entgraten der Bearbeitungskanten 3, 7 der Platte 1 über den gesamten Verlauf der Kanten 1', 1''.

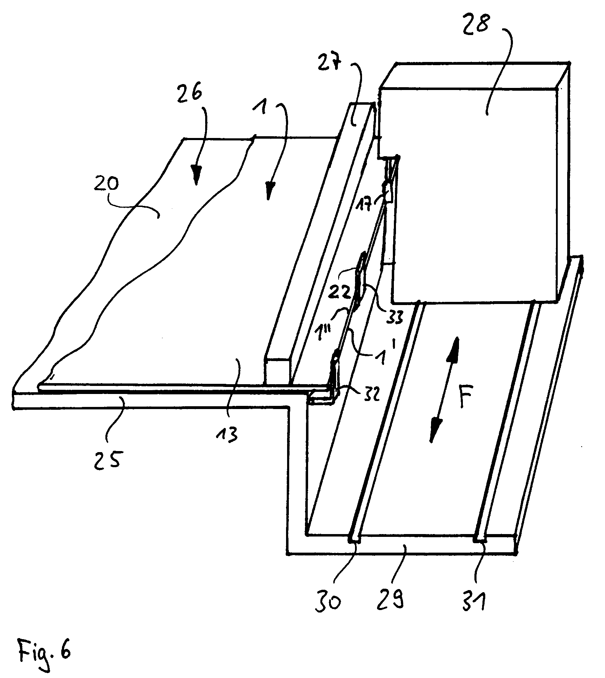

Eine stationäre Vorrichtung zum Entgraten von Kanten einer Platte ist in Fig. 6 wiedergegeben. Eine schematisch dargestellte Aufspannvorrichtung 25 bildet eine im wesentlichen horizontale Ablagefläche 26 für die Platte 1, wobei die Ablagefläche 26 auch von einer Mehrzahl voneinander beabstandeter Stützträger gebildet sein kann. Die Platte 1 liegt dabei mit ihrer Unterseite auf der Ablagefläche 26 auf, so daß die Ablagefläche 26 die erste, rechtwinklig zur Rotationsachse 19 des Werkzeugs 17 verlaufende Anlagefläche 20 bildet. Im Bereich der zu bearbeitenden Kanten 1', 1'' der Platte 1 drückt ein Andruckbalken 27 auf die obere Fläche 13 der Platte 1 und preßt diese damit gegen die Ablagefläche 26 an.

Ein Werkzeugträger 28 ist auf einem mit der Aufspannvorrichtung 25 verbundenen Support 29 in Schienen 30, 31 translatorisch verschiebbar gelagert. Die durch die Schienen 30, 31 vorgegebene und durch den Pfeil F angedeutete Traslationsbewegung des Werkzeu gträgers erfolgt parallel zu den zu bearbeitenden Kanten 1', 1'' einer ausgerichtet auf der Aufspannvorrichtung 25 befestigten Platte 1.

Zur Ausrichtung der Platte 1 in Horizontalrichtung sind Anlageelemente 32, 33 schwenkbar an der Aufspannvorrichtung 25 im Bereich der zu bearbeitenden Kanten 1', 1'', d.h. an der dem Support 29 zugewandten Seite der Aufspannvorrichtung 25 vorgesehen. Die schwenkbaren Anlageelemente 32, 33 weisen in ihrem in Fig. 6 gezeigten hochgeschwenkten Zustand auf ihrer der Platte 1 zugewandten Seite die zweite Anlagefläche 22 auf.

Die Funktionsweise dieser in Fig. 6 gezeigten Vorrichtung ist wie folgt: die Platte 1 wird auf die Ablagefläche 26 der Aufspannvorrichtung 25 gelegt und gegen die hochgeklappten Anlageelemente 32, 33 geschoben, so daß die die zu bearbeitenden Kanten 1 ', 1'' aufweisende Seitenfläche der Platte 1 in Anlage mit den Anlageelementen 32, 33 gerät. Die auf diese Weise ausgerichtete Platte 1 wird anschließend mit dem Andruckbalken 27 auf der Aufspannvorrichtung 25 arretiert. Daraufhin werden die Anlageelemente 32, 33 nach unten weggeschwenkt, wodurch sie aus der entlang der Kanten 1', 1'' verlaufenden Bewegungsbahn des Werkzeugs 17 entfernt werden. Die nunmehr freiliegenden Kanten 1', 1'' werden von dem rotierenden Werkzeug 17, das mit dem Werkzeugträger 28 entlang der Verschiebebahn F bewegt wird, in der gleichen Weise bearbeitet, wie dies in Verbindung mit den vorhergehenden Ausführungsformen, insbesondere der Ausführungsform nach Fig. 5, geschildert worden ist.

Alternativ zu der in Verbindung mit Fig. 6 beschriebenen Ausführungsform der Erfindung kann auch der Werkzeugträger 28 stationär angeordnet sein, wobei dann die mit der Platte 1 versehene Aufspannvorrichtung 25 translatorisch bewegbar ist.

### Bezugszeichenliste

- 1: Platte
- 1': Zu bearbeitende Kante
- 1'': Zu bearbeitende Kante
- 2: Profilscheibe
- 3: Konvex gekrümmter Abschnitt
- 4: Zwischenscheibe
- 5: Profillose Stirnfläche
- 6: Profilscheibe
- 7: Konvex gekrümmter Abschnitt
- 8: Reißzahn
- 9: Reißzahn
- 10: Welle
- 11: Untere Fläche
- 12: Befestigungsschraube
- 13: Obere Fläche
- 14: Durchgangsbohrungen
- 15: Durchgangsbohrungen
- 16: Durchgangsbohrungen
- 17: Werkzeug
- 18: Fräseinrichtung (Profilscheibe)
- 19: Rotationsachse
- 20: Anlagefläche
- 21: Winkelprofil
- 22: Anlagefläche
- 23: Getriebemotor
- 24: Öffnung
- 25: Aufspannvorrichtung
- 26: Ablagefläche
- 27: Andruckbalken
- 28: Werkzeugsträger
- 29: Support
- 30: Schiene
- 31: Schiene
- 32: Anlageelement
- 33: Anlageelement

## Patentansprüche

1. Vorrichtung zum Entgraten von Kanten einer Platte (1), insbesondere einer Metallplatte, mit einem rotierenden Werkzeug (17), das mit zwei im Bereich seines Außenumfangs vorgesehenen, einander zugewandten Bearbeitungskanten (3, 7) zwei im wesentlichen parallel zueinander - verlaufende Kanten (1, 1'') umgreift und mit diesen in Berührung bringbar ist, von denen eine erste Kante (1') an einer unteren Fläche (11) und eine zweite Kante (1'') an einer oberen Fläche (13) der Platte (1) gebildet ist, und mit zumindest einer Anlagefläche (20; 22) zur Positionierung des Werkzeugs (17) bezüglich der Platte (1).

2. Vorrichtung nach Anspruch 1, bei welcher sich die Anlagefläche (20) im wesentlichen rechtwinklig zur Rotationsachse (19) des Werkzeugs (17) erstreckt.

3. Vorrichtung nach Anspruch 2, bei welcher die Anlagefläche (20) das rotierende Werkzeug (17) zumindest teilweise umgibt.

4. Vorrichtung nach Anspruch 1 oder 2, bei welcher sich die Anlagefläche (22) im wesentlichen parallel zu einer durch die Rotationsachse (19) des Werkzeugs (17) verlaufenden Ebene erstreckt.

5. Vorrichtung nach Anspruch 2 und 4, bei welcher eine erste, rechtwinklig zur Rotationsachse (19) des Werkzeugs (17) verlaufende Anlagefläche (20) radial außerhalb der Bearbeitungsflächen (3, 7) des Werkzeugs (17), aber diesen axial und radial benachbart angeordnet ist und bei welcher eine zweite, parallel zur Rotationsachse (19) des Werkzeugs (17) verlaufende Anlagefläche (22) in einem Abstand von der Rotationsachse (19) angeordnet ist, der geringer ist als der Radius des rotierenden Werkzeugs (17), wobei in der zweiten Anlagefläche (22) eine Öffnung (24) zum Durchtritt eines Teils des Außenumfangs des Werkzeugs (17) vorgesehen ist.

6. Vorrichtung nach einem Ansprüche 1 bis 4, bei welcher eine stätionäre Aufspannvorrichtung (25) für die Platte (1) vorgesehen ist, die sowohl eine erste, rechtwinklig zur Rotationsachse (19) des Werkzeugs (17) verlaufende Anlagefläche (20) als auch eine zweite, parallel zur Rotationsachse (1 9) des Werkzeugs (17) verlaufende Anlagefläche (22) aufweist, und die einen mit der Aufspannvorrichtung (25) verbundenen und bezüglich der Aufspannvorrichtung (25) translatorisch verfahrbaren Werkzeugträger (28) besitzt, wobei sich die Verfahrbahn des Werkzeugträgers (28 ) parallel zu den zu bearbeitenden Kanten (1', 1'') erstreckt.

7. Vorrichtung nach Anspruch 6, bei welcher die zweite Anlagefläche (22) an zumindest einem Anlageelement (32, 33) vorgesehen ist, das im Bereich der zu bearbeitenden Kanten (1', 1'') an der Aufspannvorrichtung (25) schwenkbar angebracht ist.
